# EUROPEAN PATENT APPLICATION

(11) **EP 1 689 060 A2**
(43) Date of publication of application: **09.08.2006**
(21) Application number: 06002512.9
(22) Date of filing: 07.02.2006
(51) Int. Cl.: H02J 3/38

(54) **Synchronization of a current converter with an AC load**

(30) Priority: 07.02.2005 JP 2005031052
(71) Applicant: YAMAHA HATSUDOKI KABUSHIKI KAISHA, Iwata-shi, Shizuoka-ken (JP)
(72) Inventor: Fukaya, Mitsuo, Iwata-shi, Shizuoka-ken (JP); Uchino, Takashi, Iwata-shi, Shizuoka-ken (JP)
(74) Representative: Grünecker, Kinkeldey, Stockmair & Schwanhäusser Anwaltssozietät

(57) **Abstract**

The present invention relates to a current converter means (1) provided with an inverter (10) for converting DC output from a DC power source generating unit (20) into AC output of a predetermined frequency and capable of supplying the AC output to a load via an output line (Lo), comprising a zero-crossing detection means (127) configured to detect a zero-crossing of an AC output waveform on the output line (Lo), and an operation control means (13) configured to generate a drive signal in synchronization with a timing of the zero-crossings detected by the zero-crossing detection means (127), and to drive the inverter (10) using the drive signal to perform a synchronized operation process.

## Description

The present invention relates to a current converter means (preferably an inverter AC generator) provided with an inverter for converting a DC output from a DC power source generating unit, which can generate DC power converted from any energy other than electricity, into an AC output of a certain frequency, and capable of supplying the AC output to a load via the output line. The invention further relates to a method for converting a DC output into an AC output.

An AC coupling system is conventionally known, in which an electric power converter 2 converts DC outputted from a DC power source 1 into AC to be connected to an electric power system 5 via a switch 4 (see JP-A-S62-77833). The AC coupling system is designed to allow a synchronization detection circuit 42 to detect an AC voltage of the electric power system 5 to compare the phase of such AC voltage with a phase of a coupling-point detected voltage 12 on the side of the AC converter 2. If both the voltage phases match, the AC coupling system is designed to output an operation signal 41 a to the switch 4 via a switch operation circuit 41, thereby turning the switch 4 on. The electric power converter 2 is designed to be driven in synchronization with an AC voltage of the electric power system 5 via a PLL circuit 34 having a phase reference signal "□" and a voltage control circuit 23.

However, the AC/DC electric power converter 2 only controls the voltage phase on its side to match the voltage phase of the electric power system 5. When both AC output frequencies including cycles are mismatched, a high-quality AC output waveform cannot be provided. In addition, since the electric power converter 2 starts the automatic control of the voltage phase from the point in time when the switch 4 is turned on, the phases could possibly not match in an instant when the automatic control starts. In such a case, overcurrent as cross current flows-in toward the electric power converter 2 via a connecting portion with the electric power system 5. This could result in arc occurring in the connecting portion as well as in deficiencies due to heat breakage or deterioration over time.

The present invention is derived from the foregoing problems, and the object of the invention is to provide a current converter means (preferably an inverter AC generator) for outputting an inverter drive signal synchronized to a zero-crossing timing and frequency (including a cycle) of AC output in order to improve the quality of an AC output waveform in parallel operations and to a respective method for converting a DC output into an AC output.

This objective is solved in an inventive manner for an apparatus aspect by a current converter means provided with an inverter for converting DC output from a DC power source generating unit into AC output of a predetermined frequency and capable of supplying the AC output to a load via an output line, comprising a zero-crossing detection means configured to detect a zero-crossing of an AC output waveform on the output line, and an operation control means configured to generate a drive signal in synchronization with a timing of the zero-crossings detected by the zero-crossing detection means, and to drive the inverter using the drive signal to perform a synchronized operation process.

Preferably, the operation control means is configured to generate the drive signal in synchronization with the timing of the zero-crossings detected by the zero-crossing detection means, provided that the zero-crossing detection performed by the zero-crossing detection means meets a certain condition. Therein, it is further preferable if the certain condition includes a predetermined number of zero-crossings to be detected.

Still further, preferably an AC power provided from the inverter is outputted through a parallel connection to the output line of another current converter means that has already been in operation.

According to a further embodiment, the zero-crossing cycle is calculated based on the timing of the zero-crossings detected, and the operation control means is configured to regulate a cycle of a drive signal to be generated such that a differential from the calculated zero-crossing cycle is zero, and is configured to further regulate the timing for producing the drive signal such that this timing matches the timing of the zero-crossings detected, such that a synchronization preparation process is performed to synchronize the cycles and the phases, wherein, when the synchronization preparation process has been completed, the operation control means generates the drive signal to be outputted to the inverter.

The present current converter means may further comprise a storage unit storing plural control programs for generating drive signals respectively for plural preset frequencies, wherein the operation control means calculates a frequency of the AC output based on the timing of the zero-crossings detected by the zero-crossing detection means, and executes one of the plural control programs stored in the storage unit, which corresponds to the calculated frequency, to generate the drive signal.

According to another embodiment, the operation control means discontinues the synchronized operation process when a variation in frequency of the AC output exceeds a predetermined threshold, and then executes a normal operation process for driving the inverter by a drive signal generated based on an internally generated timing signal.

According to yet another embodiment, the operation control means executes the normal operation process for driving the inverter by the drive signal generated based on the internally generated timing signal if the zero-crossing detection means does not detect any zero-crossing.

The objective of the present invention is solved in an inventive manner for the method aspect by a method for converting a DC output from a DC power source generating unit into an AC output of a predetermined frequency and for supplying the AC output to a load, comprising the steps of: detecting a zero-crossing of an AC output waveform on an output line of an current converter means; and generating a drive signal in synchronization with a timing of the zero-crossings detected, provided that the zero-crossing detection meets a certain condition, and driving an inverter of the Current converter means using the drive signal to perform a synchronized operation process.

Preferably, the AC power is outputted through a parallel connection to an output line of another current converter means, and wherein, before the current converter means starts-up, the zero-crossing detection circuit is adapted to detect a zero-crossing on the voltage waveform of the AC output from the another electric power converter (1') that has already been in operation, and wherein, in case that both the converts operate in parallel, the zero-crossing detection circuit is adapted to detect a zero-crossing on a composite voltage waveform of both AC outputs from the converters.

In the following, the present invention is explained in greater detail with respect to several embodiments thereof in conjunction with the accompanying drawings, wherein:
- FIG. 1: is a circuit block diagram of an inverter AC generator (current converter means) as an embodiment,
- FIG. 2: is an example block diagram of a software configuration for a main control unit of the present inverter AC generator (current converter means),
- FIG. 3: is a detailed circuit block diagram of the present inverter AC generator as an embodiment,
- FIG.4: shows an example of a table for external load characteristics having a dropping characteristic,
- FIG. 5: shows an example of a load current-engine speed table,
- FIG. 6: is a flowchart for single frequency operations,
- FIG. 7: is a flowchart for single frequency operations,
- FIG. 8: is a flowchart for multi-frequency operations,
- FIG. 9: is a flowchart for multi-frequency operations, and

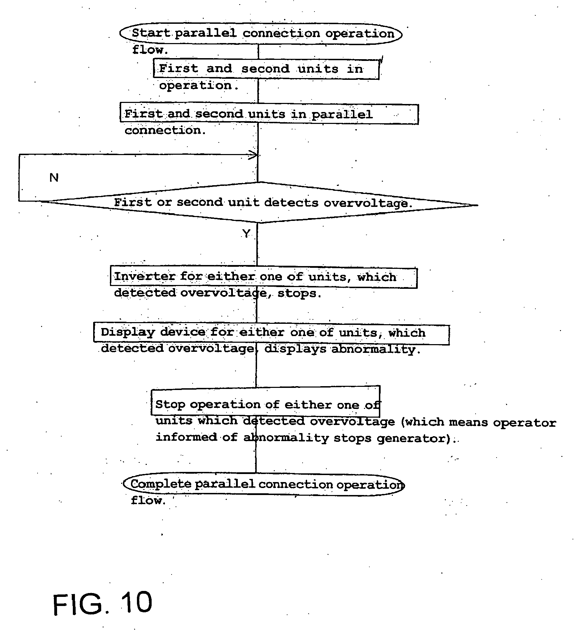

- FIG. 10: is an inverter generator's parallel operation flowchart through synchronized start-up.

### Within the drawings, the reference numerals

- 1, 1': are inverter AC generators (current converter means),
- 10: is an inverter AC generating unit,
- 11: is an inverter circuit section,
- 111: is a DC conversion circuit,
- 112: is a voltage stabilizing circuit,
- 113: is an inverter circuit,
- 114: is a filter circuit,
- 12: is a detection circuit section,
- 121: is a three-phase detection circuit,
- 122: is a synchronization detection circuit,
- 123: is a DC voltage detection circuit,
- 124: is a detection resistor,
- 125: is an electric current detection circuit,
- 126: is an output voltage detection circuit,
- 127: is a zero-crossing detection circuit,
- 13: is an operation control unit,
- 131: is a phase control unit,
- 132: is a drive circuit,
- 133: is a main control unit,
- 1331: is an operation initializing unit,
- 1332: is a timer unit,
- 1333: is a determination unit for number of zero-crossings,
- 1334: is a synchronization processing unit,
- 1335: is a normal processing unit at single operation,
- 1336: is an operation condition (parallel, single) monitoring unit,
- 1337: is an engine speed control unit,
- 1338: is an overvoltage processing unit,
- 134: is a storage unit,
- 135: is a drive signal generating circuit,
- 136: is a FET drive circuit,
- 137: is an operation amplifier,
- 138: is a control power source unit,
- 20: is an engine, and
- 21: is a power generation.

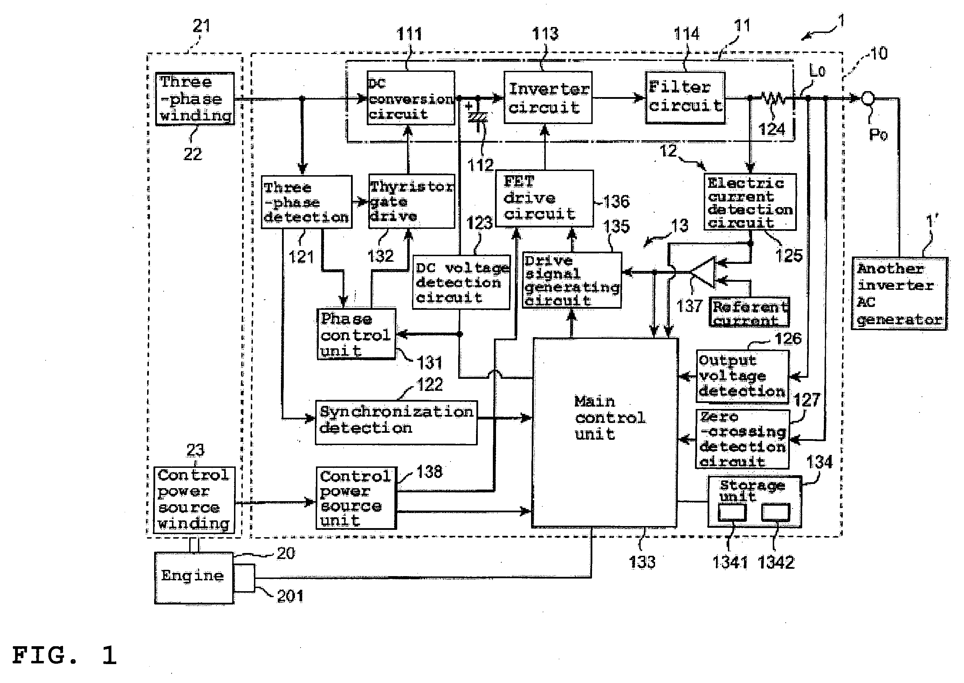

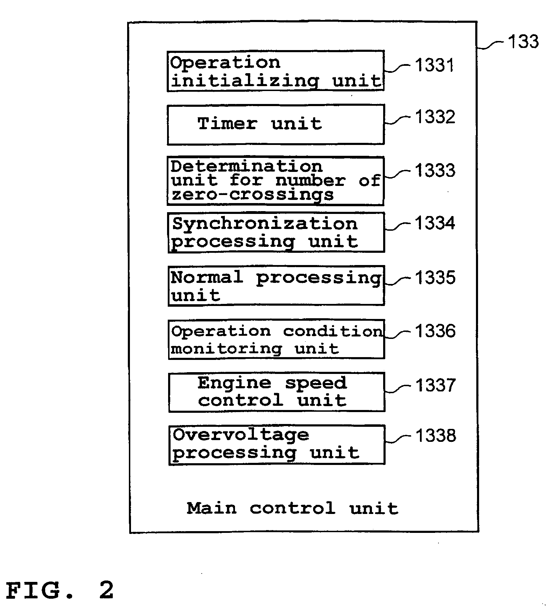

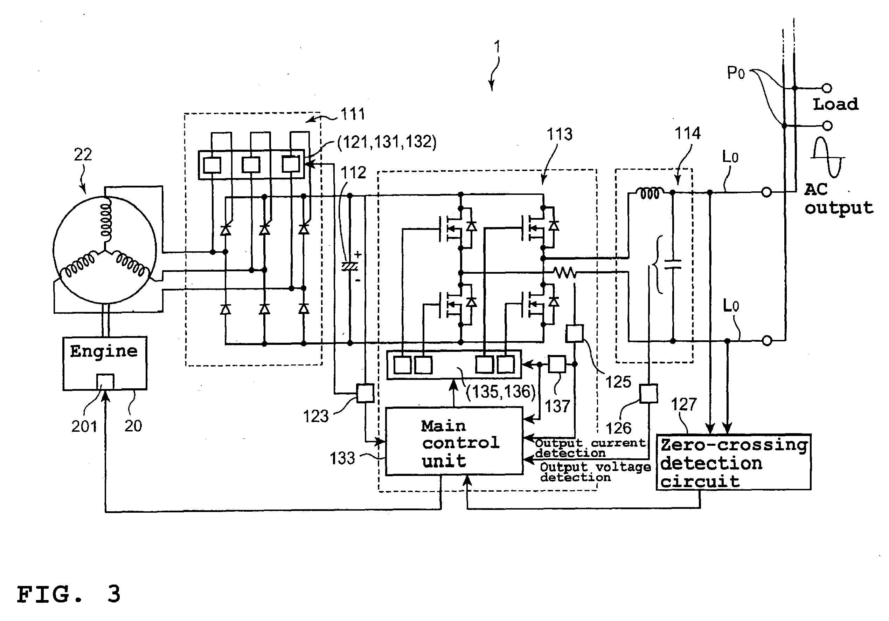

FIG. 1 is a circuit block diagram of an inverter AC generator as an embodiment of a current converter means. FIG. 2 is a block diagram of a software configuration for a main control unit of the inverter AC generator. FIG. 3 is a detailed circuit diagram of FIG. 1.

An inverter AC generator 1 of FIG. 1 has an inverter AC generating unit 10 and an engine 20 connected thereto, and is designed to use rotational driving power of the engine 20 to generate AC power as required.

The engine 20 is an internal combustion engine driven with gasoline, and has a throttle opening regulating unit 201 including a motor for regulating the opening of a throttle valve designed to change an engine operation speed or rotational speed. The throttle opening regulating unit 201, which is controlled by the inverter AC generating unit 10, regulates the opening of the throttle valve. To an output section of the engine 20 is connected to a generator with a required number of phases, for example, a three-phase AC generator 21. The generator 21 has: plural magnets on a rotor side (not shown) disposed around an output rotational shaft of the engine 20 (or another rotational shaft connected thereto); a three-phase winding 22 on a stator side, which crosses a magnetic flux from each of the plural magnets; and a single-phase auxiliary winding 23 for obtaining power source for operating the inverter AC generating unit 10.

The inverter AC generating unit 10 includes: an inverter circuit section 11 with its input side connected to the three-phase winding 22 and its output side connected to an output line Lo; a detection circuit section 12 connected to the input side and the output line Lo for detecting conditions of electric power at each unit on the input side and the output line Lo; and an operation control unit 13 for controlling operation of the inverter circuit section 11 based on detection results from the detection circuit section 12.

The inverter circuit section 11 is made up of: a DC conversion circuit 111 with each phase thyristor of a bridge connection for rectifying three-phase AC power induced by the three-phase winding 22 to convert it into DC power; a voltage stabilizing circuit 112 for smoothing the converted DC power, such as a capacitor; an inverter circuit 113, including a field-effect transistor (FET), for converting the smoothed DC power into AC power of a certain frequency; and a filter circuit 114 for rectifying an inverter output waveform to a sine waveform. The output line Lo is connected to a load (not shown). The end of the output line Lo is provided with a connecting member Po for connecting to the load or a load line. The generator 21, the DC conversion circuit 111 and the voltage stabilizing circuit 112 constitute a DC power source generating unit.

As shown in FIG. 1, the inverter AC generator 1, and another inverter AC generator 1' are connectable in parallel via the connecting member Po to the load (not shown), which allows two units or the inverter AC generators 1, 1' to operate in parallel. In the embodiment of the present invention, the inverter AC generator 1 and another inverter AC generator 1', which are connected in parallel, have the same configurations.

The detection circuit section 12 includes: a three-phase detection circuit 121 for detecting phases of three-phase waveforms induced by the three-phase winding 22; a synchronization detection circuit 122 for detecting a synchronization signal for controlling the rotational speed of the engine 20 out of the phase signals from the three-phase detection circuit 121; a DC voltage detection circuit 123 for detecting the voltage level smoothed by the voltage stabilizing circuit 112; a detection resistor 124 with a small resistance for detecting the AC output current and connected in series to the output line Lo; an electric current detection circuit 125 for detecting electric current based on the voltages at the both ends of the detection resistor 124; an output voltage detection circuit 126 for detecting the voltage of the AC output from the output line Lo; and a zero-crossing detection circuit 127 for detecting a zero-crossing on the voltage waveform of the AC output from the output line Lo and outputting a timing signal of the zero-crossing detected to an operation control unit 13. Before the inverter AC generator 1 starts-up, the zero-crossing detection circuit 127 is adapted to detect a zero-crossing on the voltage waveform of the AC output from another inverter AC generator 1' that has already been in operation. In turn, while both the inverter AC generators 1, 1' operate in parallel, the zero-crossing detection circuit 127 is adapted to detect a zero-crossing on a composite voltage waveform of both AC outputs from the inverter AC generators 1, 1'.

The operation control unit 13 has: a phase control unit 131 constituted by a CPU for generating and outputting a timing signal to allow the DC conversion circuit 111 to convert a required level of DC output based on the detection results from the three-phase detection circuit 121 and the DC voltage detection circuit 123; a drive circuit 132 for generating a gate signal to be adjusted to a required width based on the timing signal outputted from the phase control unit 131 and outputting the gate signal to each thyristor of the DC conversion circuit 111; a main control unit 133 constituted by a CPU for processing the detection results from each detection circuit section according to a control program to generate and output a signal for controlling operation of the inverter circuit 113 and a regulation signal to be sent to the throttle opening regulating unit 201; a storage unit 134 connected to the main control unit 133 and made up of a ROM for storing each control program necessary for operations and various data (including data tables) necessary for activating the programs, and a RAM for temporarily storing the data under processing; a drive signal generating circuit 135 for generating a drive signal based on the timing signal from the main control unit 133; an FET drive circuit 136 for generating and outputting a gate signal to drive the FET of the inverter circuit 113 upon receiving the output from the drive signal generating circuit 135; an operation amplifier 137 for comparing a current value of the AC power to a given reference current value and outputting a comparison result to the drive signal generating circuit 135; and a control power source unit 138 for obtaining power source from the auxiliary winding 23 as required to ensure power source sufficient to operate the phase control unit 131 and the main control unit 133.

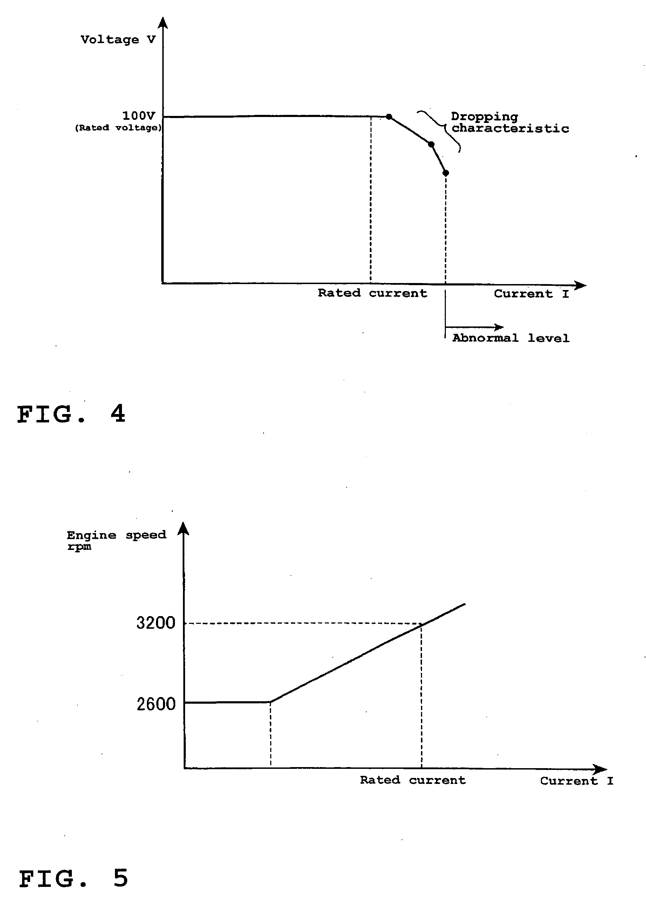

FIG. 4 shows an example of an external load characteristics table 1341 having a dropping characteristic, which indicates a relationship between AC output current (load current) and voltage. FIG. 5 shows an example of a load current-engine speed table 1342, which indicates a relationship between AC output current (load current) and engine speed, and is stored in the storage unit 134. When a detected current exceeds the reference current value (e.g. a maximum current while the dropping characteristic appears as shown in FIG. 4), the operation amplifier 137 is adapted to output an abnormality signal to the drive signal generating circuit 135 to forcibly stop hardware operation thereof.

The storage unit 134 includes at least the external load characteristics table 1341 having the dropping characteristic in FIG. 4 and the load current-engine speed table 1342 in FIG. 5 both as a program, in addition to a program memory area for storing an operation control program and frequency selection program. The storage unit 134 uses a flag, for example, to record the conditions of the inverter AC generator 1 whether or not it operates dependent on and in parallel to another inverter AC generator 1'. Further, the storage unit 134 stores given predetermined frequencies, for instance 50Hz and 60Hz in Japan, as reference values. This information is used to monitor the parallel operation conditions, as will be discussed later.

Depending on the control program, the main control unit 133 can include: an operation initializing unit 1331 for the engine 20; a timer unit 1332; a determination unit 1333 for the number of zero-crossings; a synchronization processing unit 1334; a normal processing unit 1335 for single operation; an operation condition (parallel or single) monitoring unit 1336; an engine speed control unit 1337; and an overvoltage processing unit 1338. A synchronization processing function for parallel operations, to be conducted together with the control program partly for the frequency selection process, may also be applicable as one of the embodiments.

The operation initializing unit 1331 for the engine 20 in the main control unit 133 allows the engine 20 to start-up or start rotational operation by turning-on a start button (not shown) for the engine 20 to activate the control power source unit 138. When a CPU for the main control unit 133 starts-up, the operation initializing unit 1331 fully opens the throttle valve first while outputting a control signal to the throttle opening regulating unit 201 to regulate the throttle valve to a predetermined opening.

The timer unit 1332 is designed to ensure a time period required for stabilizing operations of the main control unit 133 after its start-up, and to measure a given predetermined time period T0 for allowing zero-crossing detection operations.

The determination unit 1333 for the number of zero-crossings is designed to determine whether or not the zero-crossing detection for the AC output on the output line Lo (or AC output from another inverter AC generator 1' in operation if the inverter AC generator 1 has not yet started-up) meets a certain condition for starting parallel operations (a certain number of zero-crossings detected in this embodiment), for example, whether or not the detected zero-crossing is counted five times.

The synchronization unit 1334 is designed to allow an internal counter of the main control unit 133 to measure the detected timing for the zero-crossing and time interval between any two sequentially detected zero-crossings to determine a cycle (frequency) of the AC output, then implement the process for both the phase and frequency of the AC output from the inverter AC generator 1 to correspond to the phase and frequency determined based on the detected zero-crossings on the AC output from another inverter AC generator 1' (synchronization preparation process), that is, to preset the phase and frequency for a drive signal to be generated, and then output a drive control signal to the drive signal generating circuit 135 according to the phase and frequency obtained through the synchronization preparation process in order to generate the drive signal preset in the synchronization preparation process so that the inverter circuit 113 can generate AC output of waveform in synchronization with the AC output from another AC generator 1'. The synchronization preparation process refers to a process in the synchronization processing unit 1334, which includes: comparing the phase (timing) and frequency, either calculated for each cycle or averaged, for the AC output on the output line Lo, with the assumed phase and frequency for the drive control signal to be generated; and regulating the timing and cycle (frequency) by changing the timing for the internal clock to start counting and the number of clocks, in order to compensate the differential.

The normal processing unit 1335 for single operation is designed to output the drive control signal independently generated by the normal processing unit 1335, when another inverter AC generator 1' stops operations or is disconnected to the inverter AC generator 1. For example, in the event that another inverter AC generator 1' discontinues operations while operating in parallel to the inverter AC generator 1, the normal processing unit 1335 could change the frequency and phase to required values. However, in this embodiment, the inverter AC generator 1 is adapted to continue single operation at the same frequency as of the time immediately before the stop of the parallel operations, or at the reference frequency immediately before the stop of parallel operations.

The operation condition (parallel or single) monitoring unit 1336 is designed to determine the operation conditions based on the zero-crossing detection results or a frequency of composite waveform of the AC outputs from both the inverter AC generators and the reference frequency. The reference frequency used for this determination refers to a frequency stored in the storage unit 134 (defined as either 50Hz or 60Hz in this embodiment) and selected as more approximate to a frequency obtained from the detected zero-crossings.

The engine speed control unit 1337 is designed to output a regulation signal for regulating the engine speed, depending on the data in the table memories of FIGs. 4 and 5, to the throttle opening regulating unit 201.

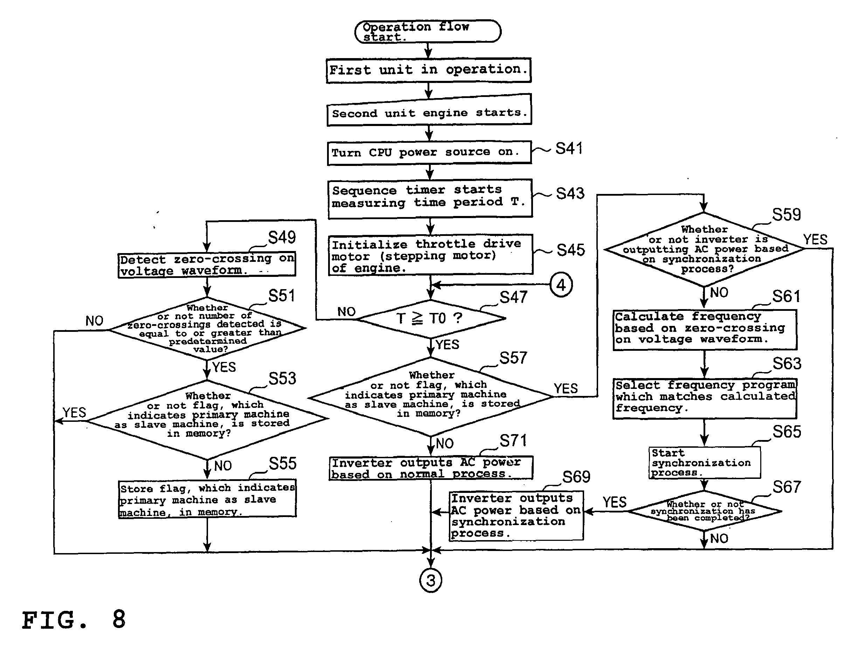

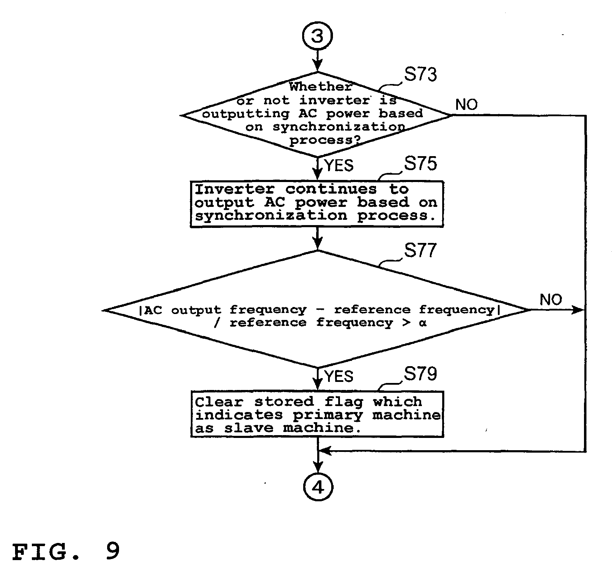

In the synchronization process for parallel operations to be conducted together with the control program including the frequency selection process, a program for selecting and presetting a frequency for the required value is stored in the storage unit 134 in advance to implement the process to select a frequency closest to the one obtained based on the timing interval, of the zero-crossings. Also, the control program corresponding to the selected frequency is activated to generate the drive control signal more effectively, whereby high synchronization accuracy can be achieved in parallel operations. Further details are described with reference to FIGs. 8 and 9.

If the DC voltage detection circuit 123 detects a certain level of voltage or greater, the overvoltage processing unit 1338 is designed to stop the main control unit 133 from outputting the drive control signal and stop the inverter circuit 113 from outputting AC power, as well as to send a signal for informing these stoppages from the main control unit 133 to an informing unit such as a display device (not shown).

Next, an example of a specific configuration of the inverter AC generator 10 is described with reference to FIG. 3. The DC conversion circuit 111 is made up of series circuits, which include a thyristor and a diode for each phase, and is designed to perform full-wave rectification by inputting a gate pulse subjected to the timing control for each phase from the drive circuit 132 to a thyristor gate repeatedly every cycle.

The inverter circuit 113 is constructed by four switching devices, each formed by a rectification diode and an FET connected in parallel each other, which are connected in bridge mode, and designed to convert DC voltage into AC output by alternately turning on/off the two pairs of diagonally arranged FETs based on the gate pulse or gate signal (drive signal) from the drive circuit 136 through the main control unit 133 and the drive signal generating circuit 135. The synchronization processing unit 1334 in the main control unit 133 outputs the drive control signal or gate signal at the same timing as the zero-crossing and at the timing of 1/2 cycle thereof to the two pairs of diagonally arranged FETs in the inverter circuit 113 via the main control unit 133 and the drive signal generating circuit 135. PWM control, for modulating a duty cycle or pulse width of the gate signal depending on the detection levels of the current detection circuit 125 and the output voltage detection circuit 126, allows adjustment of the AC output to a desired level (e.g. rated voltage of 100V or 200V).

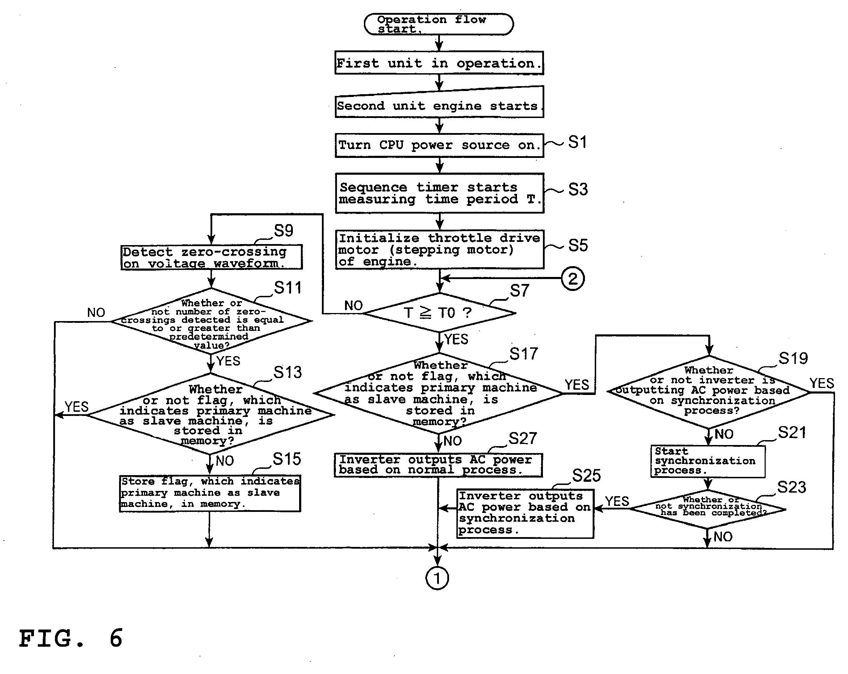

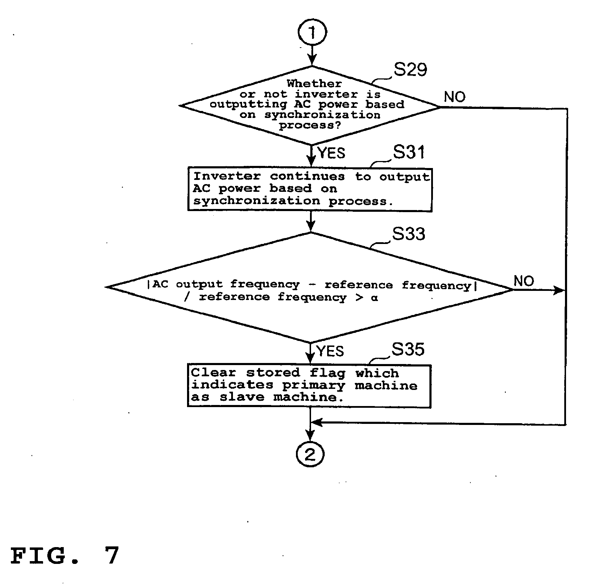

The filter circuit 114 is constructed by an LC circuit and designed to smooth a square wave outputted from the inverter circuit 113 into a sine wave to be outputted to the output line Lo as AC output. Next, FIGs. 6 to 9 show flowcharts for operations of the inverter AC generators. Each of FIGS. 6 and 7 represents the case of the single-frequency operations while each of FIGs. 8 and 9 represents the case of the multi-frequency operations.

FIGs. 6 and 7 are the flowcharts which also covers the case that the inverter AC generator 1 (second unit) starts operation in parallel to another inverter AC generator 1' (first unit) that has been in operation. Initially, the connecting member Po for the output line Lo is connected to the load (not shown). Then, the operation of the engine 20 for the second unit is started. Following this engine start, the power source from the control power source unit 138 is activated so that the CPU in the main control unit 133 starts-up (step S1). This allows a sequence timer to start measuring a time period T (step S3). Further, a control signal for regulating the throttle valve is outputted to the throttle opening regulating unit 201 as the operation initialization process for the engine 20 (step S5).

Next, a determination is made whether or not the time period T is equal to or greater than a predetermined start-up time period T0 for several seconds, e.g. two seconds, (step S7). If the determination is NO, that is, the time period T is not equal to or greater than the predetermined time period T0, the process detects the zero-crossing on the voltage waveform of the AC output (step S9). Then, a determination is made whether or not a condition for starting parallel operations, that the number of zero-crossings detected is equal to or greater than a predetermined value, e.g. five, is met (step S11). If the determination is NO, that is, the number of zero-crossings detected is below the predetermined value, the process goes back to the step S7 via the step S29 to be discussed later. On the other hand, if the determination is YES, that is, the number of zero-crossings detected reaches the predetermined value, a determination is made whether or not a flag, which indicates the inverter AC generator 1 (primary machine) as a slave machine for the first unit, is stored in the storage unit 134 (step S13). If the determination is NO, that is, such flag is not stored in the storage unit 134, then the flag, which indicates the inverter AC generator 1 as a slave machine, is stored in the storage unit 134 (step S15). Then, the process goes back to the step S7 via the step S29 to be discussed later.

Within the time period T0, the loop, in which the determination is repeatedly NO in the step S7 and the step S29, is executed. In the step S13, if the determination is YES, that is, the flag, which indicates the inverter AC generator 1 as a slave machine, is stored, in other words, the number of zero-crossings detected exceeds the predetermined value, then the process skips the step S15 and goes back to the step S7 via the step S29. This is repeatedly performed.

Next, if the determination is YES, that is, the time period T is equal to or greater than T0, in the step S7, a determination is made whether or not the flag, which indicates the inverter AC generator 1 as a slave machine, is stored (step S17). If the determination is YES, that is, the flag, which indicates the inverter AC generator 1 as a slave machine, is stored, then a determination is made whether or not the inverter is already outputting AC power based on the synchronization process (step S19). If the determination is YES, the process goes to the step S29, or if NO, then the synchronization process starts, in other words, the aforementioned synchronization preparation process is implemented (step S21). Then, a determination is made whether or not the synchronization preparation process has been completed (step S23). If the determination is NO, that is, the synchronization preparation process has not been completed, the process goes to the step S29. If the determination is YES, that is, the synchronization preparation process has been completed, then the drive control signal is outputted to the drive signal generating circuit 135 based on the synchronization process (step S25). This allows the inverter circuit 113 to output AC power.

Next, a determination is made whether or not the inverter is outputting AC power based on the synchronization process (step S29). If the parallel operations have not yet started or if the determination is NO in the step S29, then the process goes back to the step S7 as described above. In contrast, if the inverter is outputting AC power based on the synchronization process, or the parallel operations continue since the step S25, then the inverter continues to output AC power based on the synchronization process (step S31). In the synchronization process, the zero-crossing timing is sequentially detected based on the composite voltage waveform of AC output from the output line Lo to calculate the frequency.

Subsequent to that, the zero-crossing frequency obtained by detecting the zero-crossings of the composite voltage waveform of the AC output from the output line Lo and the reference frequency selected as more approximate to this zero-crossing frequency are used to calculate a differential between the zero-crossing frequency and the reference frequency. A determination is made whether or not a value obtained by dividing the aforementioned differential by the reference frequency exceeds a predetermined threshold α, e.g. 1% in this embodiment (step S33). If the determination is NO, that is, the value does not exceed the predetermined threshold α, the process goes to the step S7. Since the time period T exceeds T0 at this point in time, the process goes to the step S17. If the flag, which indicates the inverter AC generator 1 as a slave machine, is stored or the inverter AC generators operate in parallel, the determinations can be made YES in the steps S19 and S29 respectively, so that the parallel operations are maintained. On the other hand, in the step S33, if the determination is YES, that is, the value exceeds the predetermined threshold α, the program determines that the first unit has stopped its operation and clears (resets) the flag stored in the storage unit 134, which indicates the inverter AC generator 1 as a slave machine (step S35). Further, the process goes back to the step S7. Since the time period T exceeds T0 at this point in time, the process goes to the step S17. Then, the determination is NO in the step S17, which switches the inverter to output AC power based on the normal process in the step S27, thereby shifting from the synchronization process to the normal process. Subsequent to that, this loop is repeated so that the second unit in single operation continues the normal process.

Once the operation mode of the second unit is changed to the normal single operation in the step S27, it is maintained even if the first unit starts operation, using its built-in control program that is the same as those shown in FIGs. 6 and 7.

FIGs. 8 and 9 are the flowcharts, which also cover the case that the inverter AC generator 1 (second unit), which gives higher priority to the 50Hz frequency than the 60Hz frequency, starts operation in parallel to another inverter AC generator 1' (first unit) in operation at 60Hz. The vice versa is also true, to be more specific, the frequency, to which the inverter AC generator 1 gives higher priority, could be 60Hz and in turn the frequency, at which another inverter AC generator 1' operates, could be 50Hz.

Initially, the connecting member Po for the output line Lo is connected to the load (not shown). Then, the operation of the engine 20 for the second unit is started. Following this engine start, the power source from the control power source unit 138 is activated so that the CPU in the operation control unit 133 starts-up (step S41). This allows a sequence timer to start measuring a time period T (step S43). Further, a control signal for regulating the throttle valve is outputted to the throttle opening regulating unit 201 as the operation initialization process for the engine 20 (step S45).

Next, a determination is made whether or not the time period T is equal to or greater than a predetermined start-up time period T0 for several seconds, e.g. two seconds, (step S47). If the determination is NO, that is, the time period T is not equal to or greater than the predetermined time period T0, the process detects the zero-crossing on the voltage waveform of the AC output (step S49). Then, a determination is made whether or not a condition for starting parallel operations, that the number of zero-crossings detected is equal to or greater than a predetermined value, e.g. five, is met (step S51). If the determination is NO, that is, the number of zero-crossings detected is below the predetermined value, the process goes back to the step S47 via the step S73 to be discussed later. On the other hand, if the determination is YES, that is, the number of zero-crossings detected reaches the predetermined value, a determination is made whether or not a flag, which indicates the inverter AC generator 1 (primary machine) as a slave machine, is stored in the storage unit 134 (step S53). If the determination is NO, that is, such flag is not stored in the storage unit 134, then the flag, which indicated the inverter AC generator 1 as a slave machine, is stored in the storage unit 134 (step S55). Then, the process goes back to the step S47 via the step S73 to be discussed later.

Within the time period T0, the loop, in which the determination is repeatedly NO in the step S47 and the step S73, is executed. In the step S53, if the determination is YES, that is, the flag, which indicates the inverter AC generator 1 as a slave machine, is stored, in other words, the number of zero-crossings detected exceeds the predetermined value, then the process skips the step S55 and goes back to the step S47 via the step S73. This is repeatedly performed.

Next, if the determination is YES, that is, the time period T is equal to or greater than T0, in the step S47, a determination is made whether or not the flag, which indicates the inverter AC generator 1 as a slave machine, is stored (step S57). If the determination is YES, that is, the flag, which indicates the inverter AC generator 1 as a slave machine, is stored, then a determination is made whether or not the inverter is already outputting AC power based on the synchronization process (step S59). If the determination is YES, the process goes to the step S73, or if NO, then the synchronization process starts. The frequency is initially calculated based on the zero-crossings (step S61). Since the first unit is in operation at 60Hz, the calculated frequency is assumed to approximate 60Hz. Next, the selection process (in the operation program) for selecting a frequency which matches or corresponds to the calculated frequency (60Hz rather than 50Hz in this case) is implemented (step S63) to give a command to start the synchronization process (step S65). Then, a determination is made whether or not the synchronization preparation process has been completed and the command to start the synchronization process has been given (step S67). If the determination is NO, that is, the synchronization preparation process has not been completed or the command to start the synchronization process has not been given, the process goes to the step S73. If the determination is YES, that is, the synchronization preparation process has been completed and the command to start the synchronization process has been given, then the drive control signal is outputted to the drive signal generating circuit 135 based on the synchronization process (step S69). This allows the inverter circuit 113 to output AC power.

Next, a determination is made whether or not the inverter is outputting AC power based on the synchronization process (step S73). If the parallel operations have not yet started or if the determination is NO in the step S73, then the process goes back to the step S47 as described above. In contrast, if the inverter is outputting AC power based on the synchronization process, or the parallel operations continue since the step S69, then the inverter continues to output AC power based on the synchronization process (step S75). In the synchronization process, the zero-crossing timing is sequentially detected based on the composite voltage waveform of AC output from the output line Lo to calculate the frequency.

Subsequent to that, the zero-crossing frequency obtained by detecting the zero-crossings of the composite voltage waveform of the AC output from the output line Lo and the reference frequency approximate to this zero-crossing frequency are used to calculate a differential between the zero-crossing frequency and the reference frequency. A determination is made whether or not a value obtained by dividing the aforementioned differential by the reference frequency exceeds a predetermined threshold α, e.g. 1% in this embodiment (step S77). If the determination is NO, that is, the value does not exceed the predetermined threshold α, the process goes to the step S47. Since the time period T exceeds T0 at this point in time, the process goes to the step S57. If the flag, which indicates the inverter AC generator 1 as a slave machine, is stored or the inverter AC generators operate in parallel, the determinations can be made YES in the steps S59 and S73 respectively, so that the parallel operations are maintained. On the other hand, in the step S77, if the determination is YES, that is, the value exceeds the predetermined threshold α, the program determines that the first unit has stopped operation and clears (resets) the flag stored in the storage unit 134, which indicates the inverter AC generator 1 as a slave machine (step S79). Further, the process goes back to the step S47. Since the time period T exceeds T0 at this point in time, the process goes to the step S57. Then, the determination is NO in the step S57, which discontinues the synchronization operation and switches the inverter to output AC power based on the normal process with the frequency maintained at 60Hz, thereby shifting from the synchronization process to the normal process. Subsequent to that, this loop is repeated so that the second unit in single operation continues the normal process.

Once the operation mode of the second unit is changed to the normal single operation in the step S71, it is maintained even if the first unit starts operation, using its built-in control program that is the same as those shown in FIGs. 8 and 9.

In the case that the first and second units both can be operated at respective plural frequencies or that at least the second unit can be operated at plural frequencies, the second unit can start operation independent of the preset frequency of the first unit each time. This is because the frequency of the second unit, which is dependent on the first unit and starts operation following the first unit, is automatically matched to the frequency of the first unit, even though the frequency of the second unit is preset different from the frequency of the first unit for their parallel operations. Further, in the case that the first unit stops operation, the second unit can automatically maintain operation as appropriate according to a frequency specific to the load since the second unit is designed to continue operation at the unchanged frequency.

Before the parallel operations start, a signal to be synchronized to the timing and cycle of the detected zero-crossings is preset by the main control unit 133 and the drive signal is outputted at the time of complete synchronization, thereby starting driving the inverter. Therefore, no cross current flows-in immediately after the parallel operations start, so that the load can be supplied with a load current of appropriate AC waveform.

The following variations (amongst others) may be applicable to the present embodiment.
(1) As a DC power generator, an engine and other various sources may be employed. The present teaching may be applicable to any types of power generators for converting mechanical kinetic energy, produced from energy source other than electricity, into electric energy.
(2) A certain condition for parallel operations may include the predetermined number of zero-crossings to be detected as well as the levels of the detected AC output current and voltage.
(3) In the multi-frequency parallel operations as shown in FIGs. 8 and 9, plural frequency control programs may be prepared, from which an appropriate control program corresponding to the detected frequency can be selected. However, the teaching does not limit to this, and a frequency may be sequentially calculated based on the detection results of zero-crossings to start parallel operations, as shown in FIGs. 6 and 7.
(4) In place of the formula in the steps S33 and S77, the determination may be simply made based on a differential or ratio between two frequencies. Further, for the aspect of FIGs. 8 and 9, in which activating the control program corresponding to the selected frequency allows the parallel operations to start, the determination may also be simply made based on a differential between the zero-crossing frequency and the selected frequency.
(5) The zero-crossing detection and the determination whether or not the number of zero-crossings detected reaches the predetermined value are made within the time period T0. However, a time period for stabilizing the detecting operation may be preset shorter so that the zero-crossing detection can begin immediately after a lapse of this time period.
(6) In the embodiment, the zero-crossing frequency obtained by detecting the zero-crossings of the composite voltage waveform of the AC output from the output line Lo and the reference frequency approximate to this zero-crossing frequency are used to calculate a differential between the zero-crossing frequency and the reference frequency. Then, a determination if the first unit stops operation is made depending on whether or not a value obtained by dividing the aforementioned differential by the reference frequency exceeds a predetermined threshold α. This may be replaced with various ways. In other words, such determination may simply be made based on a differential or ratio between the zero-crossing frequency and the reference frequency. Various manners could be possible to monitor a variation in frequency of AC output, other than using the reference frequency. They may include, for example, a determination whether or not a variation between the previously and currently calculated frequencies exceeds a predetermined threshold, a determination whether or not a differential (gradient) between the previously and currently calculated variations exceeds a predetermined threshold, and a determination whether or not a differential or ratio relative to a specific value exceeds a predetermined threshold.
(7) The inverter AC generator of the present embodiments is used for driving a load, which can be operated at a predetermined frequency, such as water pumps, air conditioners and heaters. In addition, the present teaching may also be applied to AC equipment operative at variable frequencies.

The description above discloses (amongst others) as a first aspect, an embodiment of an inverter AC generator provided with an inverter for converting DC output from a DC power source generating unit into AC output of a predetermined frequency and capable of supplying the AC output to a load via an output line, comprising: a zero-crossing detection means for detecting a zero-crossing of an AC output waveform on the output line; and an operation control means for generating a drive signal in synchronization with a timing of the zero-crossings detected by the zero-crossing detection means, provided that the zero-crossing detection performed by the zero-crossing detection means meets a certain condition, and for driving the inverter using the drive signal to perform a synchronized operation process.

According to the above configuration of the first aspect, the zero-crossing detection means detects the zero-crossings on an AC output waveform on the output line. If the zero-crossing detection performed by the zero-crossing detection means meets a certain condition through the operation control means, the drive signal in synchronization with the timing of the zero-crossings detected by the zero-crossing detection means is generated and supplied to the inverter. This allows the inverter to be driven by a phase and cycle (frequency) of the drive signal, thereby generating AC output. The drive signal for driving the inverter is in synchronization with the zero-crossing timing, and is therefore outputted at a frequency synchronized to the frequency of the zero-crossings. Thus, the AC power from the inverter is outputted through a parallel connection to an output line of another inverter AC generator that has already been in operation. A certain condition for the zero-crossing detection to allow the operation control means to activate includes a predetermined number of zero-crossings to be detected, for example, five consecutive detections, in view of preventing incorrect detections and ensuring more reliable synchronization. If this condition is satisfied, the zero-crossing cycle (frequency) is calculated based on the timing of the zero-crossings detected. The operation control unit regulates a cycle of a drive signal to be generated such that a differential from the calculated zero-crossing cycle (frequency) is zero, and further regulates the timing for producing the drive signal such that this timing matches the timing of the zero-crossings detected. In other words, the synchronization preparation process is performed to synchronize both the cycles (frequencies) and phases. When the synchronization preparation process has been completed, the operation control means generates the drive signal to be outputted to the inverter. The inverter generates AC output in synchronization with the drive signal. Starting the synchronized operation process in such a manner can supply the load with a high-quality AC output waveform from the start of the parallel operations till the stop. Thus, the load can achieve proper operation. Further, in order to start the synchronized operation, the drive signal is outputted to the inverter, which is unlike the conventional art which employs a means for turning the switch on. Thus, the parallel operations can reliably start at a correct zero-crossing timing. This prevents excessive surge current from occurring at the start of the parallel operations and therefore ensures a long service life for products.

The description above further discloses an inverter AC generator as a preferred second aspect of the inverter AC generator according to the first aspect, further comprising a storage unit storing plural control programs for generating drive signals respectively for plural preset frequencies, wherein the operation control means calculates a frequency of the AC output based on the timing of the zero-crossings detected by the zero-crossing detection means, and executes one of the plural control programs stored in the storage unit, which corresponds to the calculated frequency, to generate the drive signal. According to the above configuration, the AC output frequency is calculated based on the timing of the zero-crossings detected by the zero-crossing detection means. Also, one of the control programs stored in the storage unit, which correspond to the calculated frequency, is activated. Thus, there is no need to sequentially calculate the cycle (frequency) based on the zero-crossing timing. As described above, the inverter AC generator can operate in parallel to another generator by automatically corresponding with a frequency value of another generator. This can provide an easy-to-use generator independent of the frequency value of another generator. The plural preset frequencies refer to 50Hz and 60Hz in Japan in the present. Additional control programs corresponding to frequencies used in foreign countries may be established as required.

The description above further discloses an inverter AC generator as a preferred third aspect of the inverter AC generator according to the first and second aspects, wherein the operation control means discontinues the synchronized operation process when a variation in frequency of the AC output exceeds a predetermined threshold, and then executes a normal operation process for driving the inverter by a drive signal generated based on an internally generated timing signal. According to the above configuration, a variation in frequency of the AC output is monitored, and when such variation exceeds a predetermined threshold, another generator in parallel operation is considered to have stopped. Thus, the synchronized operation process is discontinued, and the drive signal is generated based on the internally generated timing signal to start the normal operation process for driving the inverter. As described above, in the case that operation of another generator is discontinued while the inverter AC is in parallel operation to that, the frequency of the AC output normally decreases gradually during a transition period or until another generator stops, that is, by the time another generator shifts to low-speed operation and stops during this transition period. Because of such a decrease in frequency (cycle) of the AC output, a variation therein exceeds a predetermined threshold. This allows the inverter AC generator to smoothly shift to a single operation through the normal operation process. As previously noted, the AC output frequency in the parallel operations refers to a zero-crossing frequency to a composite waveform of the AC output from the inverter AC generator itself and another inverter AC generator. Monitoring a variation in zero-crossing frequency over time allows to make sure that another generator stops. Various ways may be possible to monitor a variation in frequency of AC output. For example, the zero-crossing frequency initially obtained by the zero-crossing detection means could be determined as a reference frequency. Subsequent to that, a determination could be made whether or not a differential or variable ratio between the reference frequency and a frequency sequentially obtained in the parallel operations exceeds the threshold. In this case, the plural preset frequencies may be regarded as a reference frequency for the second aspect which is activated by the control programs corresponding to the respective preset frequencies. Further, a determination may be made whether or not a differential between frequencies sequentially obtained from both generators in parallel operations exceeds the predetermined threshold. If another generator stops, the drive signal preferably continues to be outputted at a frequency for the parallel operations.

The description further discloses an inverter AC generator as a preferred fourth aspect of the inverter AC generator according to the first and second aspects, wherein the operation control means executes the normal operation process for driving the inverter by the drive signal generated based on the internally generated timing signal if the zero-crossing detection means does not detect any zero-crossing. According to the above configuration, the inverter AC generator is not in operation parallel to another generator but in a single operation if no zero-crossings are detected. This allows the inverter AC generator to smoothly perform a single operation through the normal operation process.

According to the first aspect, the drive signal for driving the inverter is synchronized with the zero-crossing timing and frequency before the inverter is in operation. This allows the AC output of the inverter in operation to be connected in parallel to the output line of another generator that has already been in operation. Also as described above, this can supply the load with a high-quality AC output waveform from the start of the parallel operations till the stop. Thus, the load can achieve proper operation. Further, in order to start the synchronized operation, the drive signal is outputted to the inverter, which is unlike the conventional art employing a means for turning the switch on. Thus, the parallel operations can reliably start at a correct zero-crossing timing. This prevents excessive surge current from occurring at the start of the parallel operations while preventing heat breakage or deterioration, and therefore ensures a long service life for products.

According to the second aspect, the inverter AC generator can operate in parallel to another generator by automatically corresponding with a frequency value of another generator. This can provide an easy-to-use generator independent of the frequency value of another generator.

According to the third aspect, the AC generator can smoothly shift to a single operation through the normal operation process even when its operation in parallel to another generator is discontinued.

According to the fourth aspect, the inverter AC generator is not in operation parallel to another generator, but in a single operation if no zero-crossings are detected. This allows the inverter AC generator to smoothly perform a single operation through the normal operation process.

The description above discloses, as a particularly preferred embodiment, in order to provide an inverter AC generator for outputting an inverter drive signal synchronized to a zero-crossing timing and frequency of AC output in order to improve the quality of an AC output waveform in parallel operations, an embodiment of the inverter AC generator 1 with an inverter circuit 113 for converting DC output, obtained by converting electric power induced by a generator 21 of an engine 20 through a DC conversion circuit 111, into AC output of a predetermined frequency and capable of supplying the AC output to a load via an output line Lo, comprising: a zero-crossing detection circuit 127 for detecting a timing of zero-crossings of an AC output voltage waveform on the output line; and an operation control unit 13 for generating a drive signal in synchronization with the timing of the zero-crossings detected, provided that the zero-crossing detection circuit 127 detects five zero-crossings, and for driving the inverter by the drive signal to perform a synchronized operation process.

The description above discloses, as a further particularly preferred embodiment of the inverter generator (current converter means), an inverter power source unit having: an AC generator 21 rotated by an engine 20, a DC conversion circuit 111 for converting AC output of the AC generator 21 into DC output; and an inverter 113 for converting the output from the DC conversion circuit 111 into AC output of a predetermined frequency, comprising: an overvoltage processing unit 1338 for completing a control flow, in which output of a drive control signal from a main control unit 133 is stopped to discontinue the AC output from the inverter circuit 113, provided that a DC voltage detection circuit 123 detects that the output from the DC conversion circuit 111 reaches an overvoltage level in a primary unit while in parallel operation, as shown in a control flowchart.

## Claims

1. Current converter means (1) provided with an inverter (10) for converting DC output from a DC power source generating unit (20) into AC output of a predetermined frequency and capable of supplying the AC output to a load via an output line (Lo), comprising:
a zero-crossing detection means (127) configured to detect a zero-crossing of an AC output waveform on the output line (Lo); and
an operation control means (13) configured to generate a drive signal in synchronization with a timing of the zero-crossings detected by the zero-crossing detection means (127), and to drive the inverter (10) using the drive signal to perform a synchronized operation process.

2. Current converter means according to claim 1, wherein the operation control means (13) is configured to generate the drive signal in synchronization with the timing of the zero-crossings detected by the zero-crossing detection means (127), provided that the zero-crossing detection performed by the zero-crossing detection means (127) meets a certain condition.

3. Current converter means according to claim 2, wherein the certain condition includes a predetermined number of zero-crossings to be detected.

4. Current converter means according to one of the claims 1 to 3, wherein an AC power provided from the inverter (10) is outputted through a parallel connection to the output line of another current converter means that has already been in operation.

5. Current converter means according to one of the claims 1 to 4, wherein the zero-crossing cycle is calculated based on the timing of the zero-crossings detected, and the operation control means (13) is configured to regulate a cycle of a drive signal to be generated such that a differential from the calculated zero-crossing cycle is zero, and is configured to further regulate the timing for producing the drive signal such that this timing matches the timing of the zero-crossings detected, such that a synchronization preparation process is performed to synchronize the cycles and the phases, wherein, when the synchronization preparation process has been completed, the operation control means generates the drive signal to be outputted to the inverter.

6. Current converter means according to one of the claims 1 to 5, further comprising a storage unit storing plural control programs for generating drive signals respectively for plural preset frequencies, wherein the operation control means calculates a frequency of the AC output based on the timing of the zero-crossings detected by the zero-crossing detection means, and executes one of the plural control programs stored in the storage unit, which corresponds to the calculated frequency, to generate the drive signal.

7. Current converter means according to one of the claims 1 to 6, wherein the operation control means discontinues the synchronized operation process when a variation in frequency of the AC output exceeds a predetermined threshold, and then executes a normal operation process for driving the inverter by a drive signal generated based on an internally generated timing signal.

8. Current converter means according to one of the claims 1 to 7, wherein the operation control means executes the normal operation process for driving the inverter by the drive signal generated based on the internally generated timing signal if the zero-crossing detection means does not detect any zero-crossing.

9. Method for converting a DC output from a DC power source generating unit into an AC output of a predetermined frequency and for supplying the AC output to a load, comprising the steps of:
detecting a zero-crossing of an AC output waveform on an output line of a current converter means; and
generating a drive signal in synchronization with a timing of the zero-crossings detected, provided that the zero-crossing detection meets a certain condition, and driving an inverter of the current converter means using the drive signal to perform a synchronized operation process.

10. Method according to claim 9, wherein the AC power is outputted through a parallel connection to an output line of another current converter means (1), and wherein, before the current converter means (1) starts-up, the zero-crossing detection circuit (127) is adapted to detect a zero-crossing on the voltage waveform of the AC output from the another electric power converter (1') that has already been in operation, and wherein, in case that both the converts (1,1') operate in parallel, the zero-crossing detection circuit (127) is adapted to detect a zero-crossing on a composite voltage waveform of both AC outputs from the converters (1,1').
